Europäisches Patentamt

European Patent Office

Office européen des brevets

(19)

(11) Veröffentlichungsnummer : **0 037 057
B1**

# EUROPÄISCHE PATENTSCHRIFT

(12)

(45) Veröffentlichungstag der Patentschrift :
06.07.88

(21) Anmeldenummer : 81102208.6

(22) Anmeldetag : 24.03.81

(51) Int. Cl.⁴ : **G 02 B   6/24**

(54) Lichtwellenleiterverzweigung mit geringen Polarisationseffekten.

(30) Priorität : 28.03.80 DE 3012184

(43) Veröffentlichungstag der Anmeldung :
07.10.81 Patentblatt 81/40

(45) Bekanntmachung des Hinweises auf die Patenterteilung : 06.07.88 Patentblatt 88/27

(84) Benannte Vertragsstaaten :
AT BE CH DE FR GB IT LI NL SE

(56) Entgegenhaltungen :
DE-A- 2 903 288
GB-A- 2 020 447
US-A- 4 165 496
IBM TECHNICAL DISCLOSURE BULLETIN, Band 16, Nr. 1, Juni 1973, New York, H.H. BLOEM et al.:"Fiber-Optic Coupler" Seiten 146 bis 147
Patents Abstracts of Japan, Band 3, Nr. 21, 21 Februra 1979, Seite 126E92; & JP-A-53-149 346

(73) Patentinhaber : Siemens Aktiengesellschaft Berlin und München
Wittelsbacherplatz 2
D-8000 München 2 (DE)

(72) Erfinder : Mahlein, Hans F., Dr.
Queristrasse 2
D-8025 Unterhaching (DE)
Erfinder : Reichelt, Achim, Dipl.-Phys.
Queristrasse 4
D-8025 Unterhaching (DE)
Erfinder : Winzer, Gerhard, Dr.
Günderodestrasse 16
D-8000 München 82 (DE)

EP 0 037 057 B1

**Beschreibung**

Die vorliegende Erfindung betrifft eine Lichtwellenleiterverzweigung nach dem Strahlteilerprinzip mit geringen Polarisationseffekten nach dem Oberbegriff des Patentanspruchs 1.

Verzweigungen der eingangs genannten Art sind für die optische Nachrichtentechnik zur Herstellung von optischen Multi-/Demultiplexern in verschiedenen kompakten Bauformen ohne Linsen bereits vorgeschlagen worden. Ihre charakteristischen Merkmale sind die Verwendung des Strahlteilerprinzips mit einem spektralselektiven Strahlteilerspiegel anstelle eines konventionellen Strahlteilerspiegels. Es hat sich herausgestellt, daß bei den spektralselektiven Strahlteilerspiegeln bei schrägem Strahlungseinfall Polarisationseffekte auftreten, die um so größer sind, je größer der Einfallswinkel ist. Diese Polarisationseffekte begrenzen den mit der Verzweigung erzielbaren Kanalabstand. Aus IEEE Trans. COM-26 (1978) S. 1082, Fiber Integr. Opt. 2 (1979) 1, Electron. Lett. 15 (1979) S. 414 und der DE-A-2 903 288 sind Arbeiten japanischer Gruppen bekannt, die komplizierte Verzweigungen der eingangs genannten Art mit Linsen verwenden und durch nahezu senkrechten Strahlungseinfall oder kleine Einfallswinkel die störenden Polarisationseffekte reduzieren. Aus IBM Technical Disclosure Bulletin, Band 16, Nr. 1, Juni 1973, New York, H.H. Bloem et al, « Fiber-Optic Coupler », Seiten 146-147 ist eine Verzweigung nach dem Prinzip des sogenannten 45°-T-Kopplers ohne Kollimatorlinse bekannt, bei dem die Spiegelschicht im ungünstigen Winkel von 45° zur gemeinsamen Achse fluchtender Lichtwellenleiter angeordnet ist und der abzweigende Lichtwellenleiter im Winkel von 90° zur gemeinsamen Achse der fluchtenden Lichtwellenleiter abzweigt.

Aufgabe der vorliegenden Erfindung ist es aufzuzeigen, wie bei einer Verzweigung der eingangs genannten Art, die also vom Strahlteilerprinzip ausgeht, ohne Verwendung von Linsen die Polarisationseffekte verkleinert werden können.

Diese Aufgabe wird durch den Inhalt des kennzeichnenden Teils des Patentanspruchs 1 gelöst.

Diese so überraschend einfache Lösung führt zu erheblichen Vorteilen : Die Polarisationseffekte werden so erheblich verkleinert, daß sie in den meisten praktischen Fällen vernachlässigt werden können. Dabei bleibt der einfache Aufbau der Verzweigung, der sich bei Realisierungen, in denen der Spiegel im Winkel von 45° zur gemeinsamen Achse geneigt ist, gut bewährt hat, erhalten. Die Erhaltung des Grundkonzepts im Aufbau hat aber weiter zur Folge, daß die vorgeschlagene Verzweigung ebenso einfach hergestellt werden kann, wie jene Realisierungen mit um 45° geneigtem Strahlteilerspiegel. Die vorgeschlagene Verzweigung kann damit ebenso billig und in Massenfertigung hergestellt werden, wie jene Realisierung.

Wie bei jener Realisierung kommen auch bei der hier vorgeschlagenen Verzweigung Glasfasern, und damit in erster Linie die üblichen Kern-Mantel-Glasfasern oder auch Gradientenindexfasern als Lichtwellenleiter in Frage. Damit die am Strahlteilerspiegel reflektierte Strahlung nicht in die zuleitende Faser zurückreflektiert wird, sondern deren Mantel durchdringen und in den weiterführenden Lichtwellenleiter gelangen kann, muß bei einer vorgeschlagenen Verzweigung die Bedingung

$$\text{arc sin } (A_N/n_0) < 90° - \text{arc sin } (A_N/n_0),$$

wobei $A_N$ die numerische Apertur eines Lichtwellenleiters und $n_0$ den Brechungsindex auf der Achse des Lichtwellenleiters bedeuten, erfüllt werden. Diese Bedingung ist in der Regel ohne weiteres erfüllbar.

Es kann aber auch vorteilhaft sein, so vorzugehen, wie es in Anspruch 2 angegeben ist.

Im Hinblick auf eine möglichst einfache praktische Realisierung eines hier vorgeschlagenen Verzweigerelements erweist sich die Ausführungsform nach Anspruch 5 als besonders zweckmäßig und vorteilhaft. Alle Herstellungsverfahren, die in Zusammenhang mit einer Lichtwellenleiterverzweigung mit einem um 45° geneigten Strahlteilerspiegel bekannt oder vorgeschlagen worden sind, lassen sich bei der hier vorgeschlagenen Verzweigung entsprechend anwenden. Lediglich die Neigung von Führungsnuten zueinander und die Neigung von Schnitten oder Schnittflächen in Bezug auf Führungsnuten sind entsprechend dem neu vorgegebenen Winkel zu ändern.

Weitere vorteilhafte und bevorzugte Ausführungsformen gehen aus den Ansprüchen 3 und 4 hervor.

Besonders zweckmäßige Ausführungsbeispiele der Erfindung und die Herstellung solcher Ausführungsbeispiele werden anhand der Figuren in der nun folgenden Beschreibung näher erläutert. Von den Figuren zeigen :

Figur 1 in vereinfachter Darstellung den Grundaufbau einer vorgeschlagenen Verzweigung,

Figur 2 einen Block mit mehreren nebeneinander angeordneten Verzweigungen mit einem für alle Verzweigungen gemeinsamen Strahlteilerspiegel,

Figuren 3a bis 3d wesentliche Verfahrensschritte bei der Herstellung einer Verzweigung nach Figur 2,

Figur 4 eine Kaskade von Verzweigungen, bei der mehrere Strahlteilerspiegel mehrere fluchtende Lichtwellenleiter voneinander trennen, und

Figur 5 eine Anordnung von Verzweigungen, bei der ein von einem Strahlteilerspiegel zum nächsten führender Lichtwellenleiter für den einen Strahlteilerspiegel ein weiterer Lichtwellenleiter und für den anderen Strahlteilerspiegel ein fluchtender Lichtwellenleiter ist.

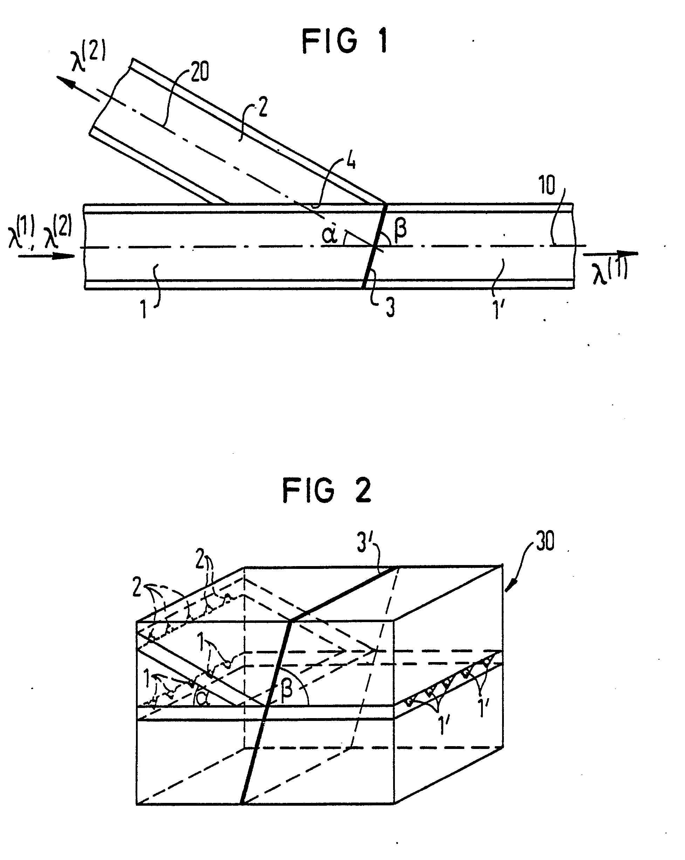

Die in Figur 1 dargestellte Verzweigung umfaßt die beiden fluchtenden Kern-Mantel-Glasfasern 1 und

# 0 037 057

1', deren gemeinsame Achse mit 10 bezeichnet ist. Die beiden Glasfasern 1 und 1' sind durch einen schräg zur gemeinsamen Achse 10 angeordneten Strahlteilerspiegel 3 voneinander getrennt. Der Strahlteilerspiegel 3 ist ein spektralselektiver Strahlteilerspiegel, beispielsweise ein optisches Kantenfilter. Die Verzweigung nach Figur 1 ist so dargestlit, daß der Strahlteilerspiegel 3 senkrecht auf der Zeichenebene steht, so daß nur die Spur des Spiegels sichtbar ist. Deutlich ist aus Figur 1 zu entnehmen, daß der Winkel β, in dem der Spiegel 3 zu der gemeinsamen Achse 10 hin geneigt ist, größer als 45° ist, was bedeutet, daß der Spiegel relativ steil zur gemeinsamen Achse 10 geneigt ist.

Ein Lichtstrahl, der entlang der gemeinsamen Achse 10 von links kommend auf den Spiegel 3 trifft, wird von diesem aufgespalten, wobei ein Anteil durch den Spiegel 3 hindurchgeht und sich dahinter entlang der gemeinsamen Achse nach rechts ausbreitet. Der andere Anteil wird vom Spiegel 3 in Richtung der strichpunktierten Linie 20 reflektiert. Die Linie 20 schneidet die gemeinsame Achse 10 auf dem Spiegel 3.

Seitlich neben den Glasfasern 1 und 1' ist schräg dazu eine weitere Kern- Mantel-Glasfaser 2 als weiterer Lichtwellenleiter angeordnet. Die weitere Glasfaser 2 ist so anzuordnen, daß ihre Achse parallel zur Linie 20 verläuft. Am besten ist es, wenn die Achse der Faser 2 mit der Linie 20 zusammenfällt. Bei der Herstellung einer Verzweigung nach Figur 1 sollte daher darauf geachtet werden, daß die Achse des weiteren Lichtwellenleiters 2 möglichst mit der Linie 20 zusammenfällt. In der Praxis wird dies aber nur innerhalb zulässiger Fertigungstoleranzen, die relativ groß sein können, erreichbar sein. Das gleiche gilt im übrigen für die fluchtenden Glasfasern 1 und 1'. Wenn daher in den Ansprüchen von fluchtenden Lichtwellenleitern, gemeinsamer Achse, schneiden zweier Achsen in einem Punkt und Ausrichtung einer Achse in einer bestimmten Richtung die Rede ist, so soll dies bedeuten, daß dies innerhalb der zulässigen Fertigungstoleranzen gilt. Innerhalb dieser Toleranzen sind relative Verschiebungen und Neigungen zulässig. In der Figur 1 ist der Idealfall dargestellt, d. h. die Linie 20 ist zugleich die Achse der weiteren Faser 2 und wird daher im folgenden auch so bezeichnet. Die den fluchtenden Fasern 1 und 1' zugewandte Stirnfläche 4 der weiteren Faser 2 ist abgeschrägt, und zwar so, daß sie parallel zur gemeinsamen Achse 10 der fluchtenden Fasern 1 und 1' verläuft. Dadurch werden günstige Verhältnisse zum Überkoppeln der reflektierten Strahlung in die weitere Faser 2 geschaffen.

Die in Figur 1 dargestellte Verzweigung kann als Multi-/Demultiplexer für zwei Wellenlängen $\lambda^{(1)}$ und $\lambda^{(2)}$ verwendet werden. Mit $\lambda^{(1)}$ ist diejenige Wellenlänge bezeichnet, die durch den Spiegel 3 hindurchgeht, während $\lambda^{(2)}$ vom Spiegel 3 reflektiert wird. Ist der Spiegel 3 beispielsweise ein kurzwellig transmittierendes Kantenfilter, ist die Wellenlänge $\lambda^{(1)}$ kürzer als die Wellenlänge $\lambda^{(2)}$. Wird ein langwellig transmittierendes Kantenfilter verwendet, kehren sich die Verhältnisse um.

In der Figur 1 sind die Brechungsgesetze vernachlässigt. Der Mantel der Faser 1 hat einen geringeren Brechungsindex als der Kern der Faser 1. Dadurch wird ein vom Spiegel reflektierter Lichtstrahl an der Grenzfläche Kern/Mantel gebrochen. Eine zweite Brechung erfolgt beim Übergang vom Mantel der Faser 1 zum Kern der weiteren Faser 2. Haben die Kerne der Fasern 1 und 2 den gleichen Brechungsindex, so setzt sich der reflektierte Achsstrahl im Kern der weiteren Faser 2 in der gleichen Richtung fort wie im Kern der Faser 1. Ist dies nicht der Fall, müßte die Achse der Faser 2 in die Richtung ausgerichtet werden, in der sich der reflektierte Strahl bei Annahme eines anderen Kern-Brechungsindex der Faser 2 ausbreiten würde.

Damit die in der Faser 1 von links kommende, am Spiegel 3 reflektierte Strahlung nicht in die Faser 1 zurückreflektiert wird, sondern deren Mantel durchdringen und in die Faser 2 gelangen kann, muß der Winkel β zusätzlich folgender Bedingung genügen:

$$\arc \sin (A_N/n_0) < \beta < 90° - \arc \sin (A_N/n_0)$$

Dabei bedeutet $A_N$ die numerische Apertur der Faser und $n_0$ deren Brechungsindex.

Für die zur Zeit interessantesten Fasertypen ergeben nich folgende maximal erlaubten Werte für den Winkel β:

| Fasertyp | $A_N$ | $n_0$ | $\beta_{max}$ |
|---|---|---|---|
| Gradienten-faser | 0,18 | 1,46 | 83° |
| Dickkern-faser | 0,4 | 1,6 | 75,5° |

Stört der Glasfaser-Mantel der Fasern 1,1' am Ort des Kontaktes mit der weiteren Faser 2, so kann er teilweise oder vollständig abgeätzt werden.

In der Figur 2 ist eine praktische Realisierung mehrerer Verzweigungselemente nach Figur 1 dargestellt. In einem Trägerkörper sind mehrere Paare fluchtender Glasfasern 1,1' in einer Ebene

3

nebeneinander und parallel verlaufend angeordnet. Die fluchtenden Fasern 1,1' sämtlicher Paare sind durch eine ebenfalls im Trägerkörper 30 angeordnete gemeinsame Spiegelschicht 3' voneinander getrennt. Diese Spiegelschicht 3' schließt mit der Ebene, in der die Paare fluchtender Glasfasern liegen, den Winkel β ein. Mehrere weitere Glasfasern 2 sind im Trägerkörper 30 in einer anderen Ebene nebeneinander angeordnet und verlaufen ebenfalls parallel. Die weiteren Glasfasern 2 stoßen auf je ein Paar fluchtender Glasfasern 1,1'. Die weitere Ebene schließt mit der Ebene, in der die Paare fluchtender Glasfasern liegen, einen durch den Winkel β bestimmten Winkel α ein, dessen Bedeutung sich aus der Figur 1 selbstredend ergibt. Die weitere Ebene schneidet die Ebene, in der die Paare liegen, auf dem gemeinsamen Strahlteilerspiegel 3'.

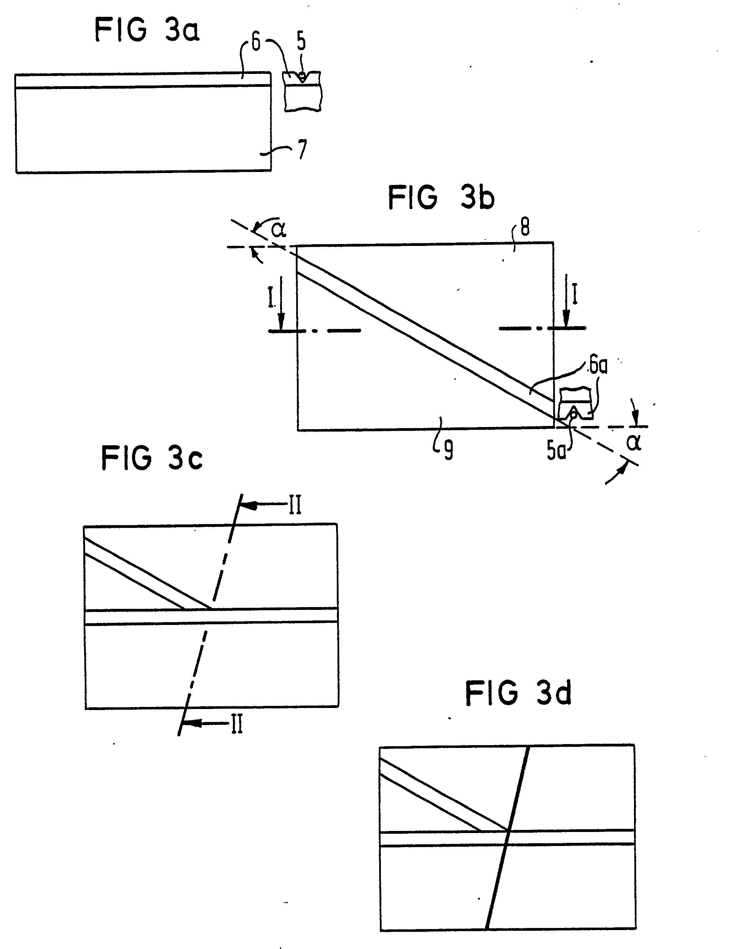

Anhand der Figuren 3a bis 3d werden die wesentlichen Verfahrensschritte bei der Herstellung des in Figur 2 dargestellten kompakten Bauteils beschrieben. In Siliziumscheiben 6, 6a werden durch anisotropes Ätzen V-Furchen erzeugt, in welche Glasfasern 5, 5a eingekittet werden. Die Siliziumscheibe 6 wird auf eine Glasplatte 7 aufgekittet, und zwar so, daß die gefurchte Seite von der Glasplatte 7 abgewandt ist. Es ist das in Figur 3a gezeigte Ausgangsteil entstanden. Die Scheibe 6a wird zwischen zwei Glasprismen 8, 9 mit den Winkeln α gekittet. Es ist das in Figur 3b dargestellte Ausgangsteil entstanden. Die gefurchte Seite der Siliziumscheibe 6a ist dem Prisma 9 zugewandt. Die Darstellung in der Figur 3b ist so, daß die Siliziumscheibe 6a senkrecht auf der Zeichenebene steht.

Das in Figur 3b dargestellte Ausgangsteil wird längs der Linie I-I in zwei Teile geschnitten. Der Schnitt erfolgt so, daß die Schnittflächen in der in Figur 3b gewählten Darstellung senkrecht zur Zeichenebene verlaufen.

Die Schnittfläche des oberhalb der Linie I-I in Figur 3b liegende Oberteil wird poliert und dann das Oberteil mit der polierten Schnittfläche auf die Scheibe 6 aufgekittet, und zwar so, daß die in den parallelen Furchen liegenden Glasfasern 5a auf die ebenfalls in parallelen Furchen liegenden Glasfasern 5 stoßen. Es ist so das in Figur 3c dargestellte Zwischenteil entstanden. Dieses Teil wird längs der Linie II-II senkrecht zur Zeichenebene geschnitten, die Schnittflächen poliert und auf eine der Schnittflächen ganzflächig eine teildurchlässige Spiegelschicht aufgebracht, beispielsweise durch Aufdampfen eines wellenlängenselektiven dielektrischen Vielschichtensystems. Die so entstandenen beiden Teile werden zu der in Figur 3d dargestellten Endstufe, die dem in Figur 2 dargestellten Bauteil entspricht, zusammengefügt und verkittet. Die verwendeten Teile der Glasfaser 5a entsprechen den Fasern 2 in Figur 2 und die fluchtenden Teile der Fasern 5 den Paaren fluchtender Fasern 1 und 1'.

Wird das in Figur 3b dargestellte Teil durch vertikale Schnitte parallel zur Zeichenebene jeweils zwischen den Paaren fluchtender Fasern geschnitten, so können einzelne Verzweigungen nach Figur 1 erhalten werden.

Mit dem soeben beschriebenen Verfahren können 10 bis 20 Verzweigungen und mehr ohne Schwierigkeiten hergestellt werden. Wichtig ist bei dem Verfahren, daß die Furchen in den beiden Siliziumscheiben 6, 6a mit dem gleichen Verfahren hergestellt werden.

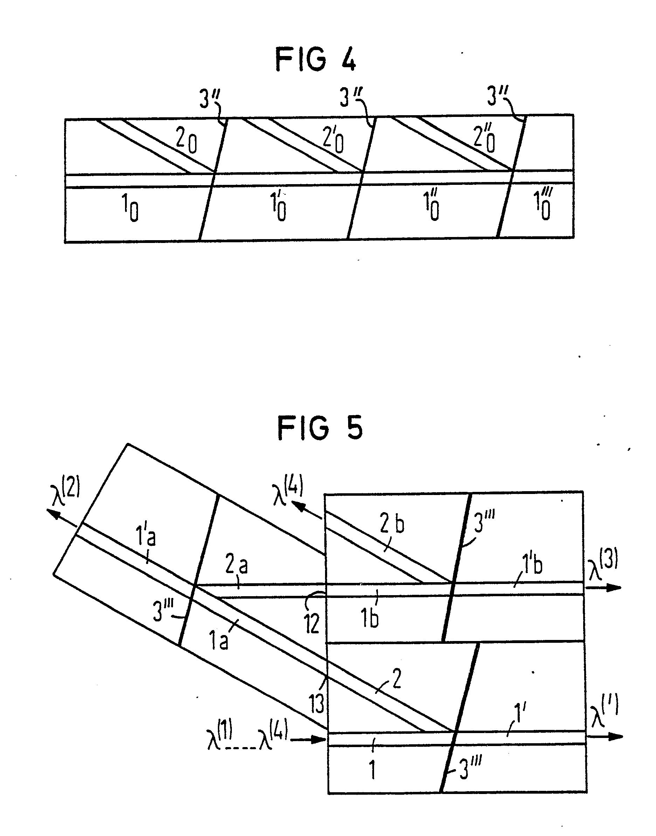

Figur 4 zeigt eine Kaskade von drei Verzweigungen, ähnlich denen der Figur 3b in Transmission. Von durch drei teildurchlässige Spiegelschichten 3'' getrennte fluchtende Lichtwellenleiter 1o, 1'o, 1''o, 1'''o zweigen an jeder Spiegelschicht 3'' jeweils ein anderer Lichtwellenleiter 2o, 2'o und 2''o ab. Verluste durch Stoßkopplung treten im transmittierenden Kanal nur an den Strahlteilerspiegel 3'' auf.

Werden mehrere Verzweigungen in Reflexion angeordnet, beispielsweise so, wie in der Ausführungsform nach Figur 5, bei der zwei oder mehrere jeweils ein Paar miteinander fluchtender, durch jeweils eine teildurchlässige Spiegelschicht 3''' voneinander getrennte Lichtwellenleiter 1, 1', 1a, 1'a, 1b, 1'b und einen an der Spiegelschicht von den fluchtenden Lichtwellenleitern abzweigenden anderen Lichtwellenleiter 2, 2a, 2b aufweisende Verzweigungen derart aneinandergekoppelt sind, daß mindestens einer der abzweigenden anderen Lichtwellenleiter 2, 2a einer dieser Verzweigungen an einen 1a, 1b der beiden fluchtenden Lichtwellenleiter einer anderen solchen Verzweigung stoßgekoppelt ist, so lassen sich zusätzliche Verluste durch Stoßkopplung an den Übergängen 12 und 13 werden der dort notwendigen Umkehr der Orientierung der V-Furchen nicht vermeiden.

Durch eine Kombination der in den Figuren 4 und 5 dargestellten Anordnungen können Baum-Strukturen erhalten werden, die für das Multi-/Demultiplexen besonders günstig sind.

Bei allen komplexen Anordnungen ist es aus Platzgründen zweckmäßig, mit Faserschwänzen zu arbeiten.

## Patentansprüche

1. Lichtwellenleiterverzweigung nach dem Strahlteilerprinzip mit geringen Polarisationseffekten, wobei auf einer Seite einer teildurchlässigen, spektralselektiven Spiegelschicht (3, 3', 3'') zwei Lichtwellenleiter (1, 2) derart angeordnet sind, daß eine aus einem (1) dieser beiden Lichtwellenleiter austretende Lichtstrahlung auf die genannte Spiegelschicht (3, 3', 3'') trifft und der andere Lichtwellenleiter (2) den von der Spiegelschicht (3, 3', 3'') reflektierten Strahlungsanteil empfängt, wobei auf der anderen Seite der Spiegelschicht (3, 3', 3'') ein weiterer Lichtwellenleiter (1') derart angeordnet ist, daß er den durch die Spiegelschicht (3, 3', 3'') hindurchgegangenen Strahlungsanteil der aus dem genannten einen Lichtwellenleiter (1) austretenden Strahlung empfängt, wobei die Spiegelschicht in einem Neigungswinkel (β) zur

Achse (10) des genannten einen Lichtwellenleiters (1) und zur Achse (10) des zu diesem einen Lichtwellenleiter (1) fluchtenden weiteren Lichtwellenleiters (1') angeordnet ist, der zwischen 45° und 90° und näher bei 90° liegt, und wobei die Achse (20) des genannten anderen Lichtwellenleiters (2) mit der gemeinsamen Achse (10) der miteinander fluchtenden Lichtwellenleiter (1, 1') einen Winkel (α) einschließt, der zwischen 0° und 90° liegt, dadurch gekennzeichnet, daß die aus dem genannten einen Lichtwellenleiter (1) austretende und auf die genannte Spiegelschicht (3, 3', 3") treffende Strahlung, der von der genannten Spiegelschicht (3, 3', 3") reflektierte und von dem genannten anderen Lichtwellenleiter (2) empfangene Strahlungsanteil sowie der durch die genannte Spiegelschicht (3, 3', 3") hindurchgegangene und von dem genannten weiteren Lichtwellenleiter (1') empfangene Strahlungsanteil sich jeweils unkollimiert ausbreiten, daß die miteinander fluchtenden Lichtwellenleiter (1, 1') an die teildurchlässige Spiegelschicht (3, 3', 3") angrenzen und der andere Lichtwellenleiter (2) an demjenigen (1) der beiden miteinander fluchtenden Lichtwellenleiter (1, 1') angrenzt, in den der eine Strahlungsanteil reflektiert wird, und daß die den fluchtenden Lichtwellenleitern (1, 1') zugewandte Stirnfläche (4) des anderen Lichtwellenleiters (2) parallel zur gemeinsamen Achse (10) der miteinander fluchtenden Lichtwellenleiter (1, 1') ausgerichtet ist.

2. Verzweigung nach Anspruch 1, dadurch gekennzeichnet, daß der eine (1) der beiden miteinander fluchtenden Lichtwellenleiter (1, 1') eine Kern-Mantel-Glasfaser ist, deren Mantel zumindest am Ort des Kontaktes mit dem anderen Lichtwellenleiter (2) entfernt ist.

3. Verzweigung nach Anspruch 1 oder 2, gekennzeichnet durch zwei oder mehrere teildurchlässige Spiegelschichten (3") voneinander getrennte fluchtende Lichtwellenleiter (1o, 1'o, 1"o, 1'''o), von denen an jeder Spiegelschicht (3") ein anderer Lichtwellenleiter (2o, 2'o, 2"o) abzweigt.

4. Verzweigung nach einem der vorhergehenden Ansprüche, dadurch gekennzeichnet, daß zwei oder mehrere jeweils ein Paar miteinander fluchtender, durch jeweils eine teildurchlässige Spiegelschicht (3''') voneinander getrennte Lichtwellenleiter (1, 1', 1a, 1'a, 1'b) und einen an der Spiegelschicht von den fluchtenden Lichtwellenleitern abzweigenden anderen Lichtwellenleiter (2, 2a, 2b) aufweisende Verzweigungen derart aneinandergekoppelt sind, daß mindestens einer der abzweigenden anderen Lichtwellenleiter (2, 2a) einer dieser Verzweigungen an einen (1a, 1b) der beiden fluchtenden Lichtwellenleiter einer anderen solchen Verzweigung stoßgekoppelt ist.

5. Verzweigung nach einem der vorhergehenden Ansprüche, dadurch gekennzeichnet, daß mehrere Gruppen fluchtender Lichtwellenleiter nebeneinander auf oder in einem Trägerkörper (3o) angeordnet sind, in dem zumindest eine verschiedenen Gruppen gemeinsam angehörende fluchtende Lichtwellenleiter (1, 1') voneinander trennende teildurchlässige Spiegelschicht (3') angeordnet ist.

## Claims

1. A light-waveguide junction operating in accordance with the beam-splitter principle, with low polarisation effects, where, on one side of a partially-permeable, spectral-selective reflective layer (3, 3', 3") two light-waveguides (1, 2) are arranged in such manner that a light-beam emerging from one (1) of these two light-waveguides strikes the aforesaid reflective layer (3, 3', 3"), and the other light-waveguide (2) receives the part of the beam reflected by the reflective layer (3, 3', 3"), where a further light-waveguide (1') is arranged on the other side of the reflective layer (3, 3', 3") in such manner that it receives that part of the beam emerging from the aforesaid first light-waveguide (1) after having passed through the reflective layer (3, 3', 3"), where the reflective layer is arranged in relation to the axis (10) of the aforesaid first light-waveguide (1) and in relation to the axis (10) of the further light-waveguide (1'), which is aligned at an angle of inclinaison with the light-waveguide (1), which angle is between 45° and 90° but closer to 90°, and where the axis (20) of the aforesaid other light-waveguide (2) and the common axis (10) of the mutually-aligned light-waveguides (1, 1') form an angle which is between 0° and 90°, characterised in that the beam which emerges from the aforesaid first light-waveguide (1) and is incident upon the aforesaid reflective layer (3, 3', 3"), that part of the beam reflected by the aforesaid reflective layer (3, 3', 3") is received by the aforesaid other light-waveguide (2), and that part of the beam which has passed through the aforesaid reflective layer (3, 3', 3") and is received by the aforesaid further light-waveguide (1') are each propagated uncollimated, that the mutually-aligned light-waveguides (1, 1') adjoin the partially-permeable reflective layer (3, 3', 3"), and the other light-waveguide (2) adjoins that member (1) of the two mutually-aligned light-waveguides (1, 1') into which the first part of the beam is reflected, and that the end face (4) of the other light-waveguide (2), which faces towards the aligned light-waveguides (1, 1'), extends parallel to the common axis (10) of the mutually-aligned light-waveguides (1,1').

2. A junction as claimed in Claim 1, characterised in that the first (1) of the two mutually-aligned light-waveguides (1,1') is a core-casing glass fibre whose casing is removed, at least at the point of contact with the other light-waveguide (2).

3. A junction as claimed in Claim 1 or 2, characterised by two or more light-waveguides (1o, 1'o, 1"o, 1'''o) separated from one another by partially-permeable reflective layers (3") and from which another light-waveguide (2o, 2'o, 2"o) branches off at each reflective layer (3").

4. A junction as claimed in one of the preceding Claims, characterised in that two or more junctions, which each comprise a pair of mutually-aligned light-waveguides (1,1', 1a, 1'a, 1'b) separated from one another by a respective partially-permeable reflective layer (3′′′), and another light-waveguide (2, 2a, 2b) which branches off from the aligned light-waveguides at the reflective layer, are coupled to one another in such manner that at least one of the other branching light-waveguides (2, 2a) of one of these junctions is butt-coupled to one (1a, 1b) of the two aligned light-waveguides of another such junction.

5. A junction as claimed in one of the preceding Claims, characterised in that a plurality of grooves of aligned light-waveguides are arranged one-beside-another on or in a carrier body (30) in which is arranged at least one partially-permeable reflective layer (3′) which separates aligned light-waveguides (1, 1′) commonly assigned to different groups.

## Revendications

1. Ramification de guides d'ondes optiques agencé selon le principe des diviseurs de faisceaux et présentant de faibles effets de polarisation, et dans lequel deux guides d'ondes optiques (1, 2) sont disposés d'un côté d'une couche réfléchissante (3, 3′, 3″), partiellement transparente et sélective du point de vue spectral, de telle sorte qu'un rayon lumineux sortant d'un premier (1) de ces deux guides d'ondes optiques tombe sur ladite couche réfléchissante (3, 3′, 3″) et que le second guide d'ondes optiques (2) reçoit la partie du rayonnement réfléchie par la couche réfléchissante (3, 3′, 3″), et dans lequel un guide d'ondes optiques (1′) supplémentaire est disposé sur l'autre face de la couche réfléchissante (3, 3′, 3″) de manière à recevoir la partie, qui a traversé la couche réfléchissante (3, 3′, 3″), du rayonnement sortant dudit premier guide d'ondes optiques (1), et dans lequel la couche réfléchissante est inclinée par rapport à l'axe (10) dudit premier guide d'ondes optiques (1) et par rapport à l'axe (10) du guide d'ondes optiques (1′) supplémentaire aligné avec ce premier guide d'ondes optiques (1), sur un angle d'inclinaison (α) qui est compris entre 45° et 90° et plus proche de 90°, et dans lequel l'axe (20) dudit second guide d'ondes optiques (2) fait, avec l'axe commun (10) des guides d'ondes optiques (1, 1′) alignés entre eux, un angle (α) compris entre 0° et 90°, caractérisée par le fait que le rayonnement, qui sort dudit premier guide d'ondes optiques (1) et tombe sur ladite couche réfléchissante (3, 3′, 3″), la partie du rayonnement réfléchie par ladite couche réfléchissante (3, 3′, 3″) et reçue par ledit second guide d'ondes optiques (2) ainsi que la partie du rayonnement, qui a traversé ladite couche réfléchissante (3, 3′, 3″) et est reçue par ledit guide d'ondes optiques (1′) supplémentaire, se propagent respectivement sans être collimatés, que les guides d'ondes optiques (1, 1′) alignés entre eux jouxtent la couche réfléchissante et partiellement transparente (3, 3′, 3″) et que le second guide d'ondes optiques (2) jouxte celui (1) des deux guides d'ondes optiques (1,1′) alignés entre eux, dans lequel une partie du rayonnement est réfléchie, et que la surface frontale (4), tournée vers les guides d'ondes optiques (1,1′) alignés du second guide d'ondes optiques (2) est orientée parallèlement à l'axe commun (10) des guides d'ondes optiques (1,1′) alignés.

2. Ramification suivant la revendication 1, caractérisée par le fait que le premier (1) des deux guides d'ondes optiques (1,1′) alignés est une fibre de verre à cœur et gaine, dont la gaine est retirée au moins au niveau de la zone de contact avec le second guide d'ondes optiques (2).

3. Ramification suivant la revendication 1 ou 2, caractérisée par des guides d'ondes optiques alignés (1o, 1′o, 1″o, 1′′′o) qui sont séparés les uns des autres par deux ou un plus grand nombre de couches réfléchissantes et partiellement transparentes (3″) et à partir desquels s'étend en dérivation, au niveau de chaque couche réfléchissante (3″), un autre guide d'ondes optiques (2o, 2′o, 2″o).

4. Ramification selon l'une des revendications précédentes, caractérisée en ce que deux ou plusieurs embranchements, qui comportent chacun un couple de guides d'ondes optiques (1,1′, 1a, 1b, 1′b) alignés entre eux et séparés l'un de l'autre par une couche réfléchissante et semitransparente (3″), et un autre guide d'ondes optiques (2, 2a, 2b) s'étendant en dérivation, au niveau de la couche réfléchissante, à partir des guides d'ondes optiques alignés, sont accouplés entre eux de telle sorte qu'au moins l'un des autres guides d'ondes optiques (2, 2a), disposés en dérivation, de l'une de ces ramifications est accouplée par aboutement à l'un (1a, 1b) des deux guides d'ondes optiques alignés, d'une autre ramification de ce type.

5. Ramification suivant l'une des revendications précédentes, caractérisée par le fait que plusieurs groupes de guides d'ondes optiques alignés sont disposés côte-à-côte sur ou dans un corps de support (30), dans lequel se trouve disposée au moins une couche réfléchissante et partiellement transparente (3′), séparant les uns des autres différents groupes de guides d'ondes optiques (1,1′) alignés et appartenant à différents groupes.

# FIG 1

# FIG 2

## FIG 3a

6   5

7

## FIG 3b

$\alpha$   8

I   I

6a

9   5a   $\alpha$

## FIG 3c

II

II

## FIG 3d

# FIG 4

# FIG 5